# EUROPEAN PATENT SPECIFICATION

(11) **EP 0 753 932 B1**
(45) Date of publication and mention of the grant of the patent: **13.10.1999**
(21) Application number: 96111120.0
(22) Date of filing: 10.07.1996
(51) Int. Cl.: H02K 37/14

(54) **Motor structure**
Motorzusammensetzung
Construction d'un moteur

(30) Priority: 12.07.1995 JP 19797095
(43) Date of publication of application: 15.01.1997
(73) Proprietor: MINEBEA CO.,LTD., Kitasaku-gun Nagano-ken (JP)
(72) Inventor: Suzuki, Yuzuru, Hamana-gun, Shizuoka-ken (JP); Fujitani, Sakae, Hamakita-shi, Shizuoka-ken (JP); Nakamata, Hiroto, Kakegawa-shi, Shizuoka-ken (JP); Hino, Haruyoshi, Iwata-gun, Shizuoka-ken (JP)
(74) Representative: Hering, Hartmut, Dipl.-Ing.

(56) References cited:
- EP-A- 0 474 048
- GB-A- 2 245 768
- PATENT ABSTRACTS OF JAPAN vol. 017, no. 013 (E-1304), 11 January 1993 & JP 04 244775 A (AISAN IND CO LTD), 1 September 1992,

## Description

The present invention relates to a motor structure, more particularly to a structure of a claw pole type synchronous motor and further more particularly to a structure of a claw pole type stepping motor.

A claw pole type synchronous motor including a PM type two-phase stepping motor has been used widely because it has an excellent feature that it can be manufactured at a low price. One of the typical conventional claw pole type stepping motor is disclosed in Takashi Kenjo: "Stepping motors and their microprocessor controls", pages 40 to 43, Oxford University Press, 1986 (Reprint).

A two-phase stepping motor which is one of a claw pole type synchronous motors has two stator assemblies comprising an A-phase stator assembly and a B-phase stator assembly having the same structure and coaxially arranged back-to-back, and claw poles formed circumferentially at equal intervals on each stator assembly.

In order to reduce vibration in the conventional motor, the claw poles are indexed on the A-phase and B-phase stator assemblies arranged back-to-back so that the separation angles between the center lines of the adjacent claw poles of both stator assemblies (i.e., the relative angle defined between the claw poles of the A-phase and the B-phase) are made equal to the mechanical angle of 360° /n (n being the number of steps) with the highest possible accuracy.

In spite of such strict control of the separation angles, vibration is generated every time the motor moves by one step. Further, the reduction of the vibration is limited due to the facts that ripples are large because the sum of squares of the wave form of the BEMFs (back-electromotive forces) is not linear. This limitation has been compensated to some extent by use of a frequency reduction device other than the motor.

In the course of recent advancement of the optical technology, recording devices which perform high density recording have been developed. Although having an excellent feature that the motor can be manufactured at a low price, the conventional claw pole type stepping motor could not be used on such a highly efficient recording device, since any occurrence of vibration in the motor must be strictly prevented.

The object of the present invention is to provide a motor structure which can rotate smoothly with little vibration by making the electrical separation angle (the mechanical separation angle) between the center lines of the claw poles of the adjacent stator assemblies at both phases smaller than the theoretical phase angle (the theoretical step angle) by an angle within the predetermined angular range.

In order to achieve the object of the present invention, a motor structure according to the present invention comprises a rotor having a multi-pole magnetized permanent magnet, a plurality of stator assemblies provided adjacent to each other and coaxial with the rotor having an axis, claw poles formed so as to face said rotor and arranged in parallel with the axis of the rotor on each of the stator assemblies and circumferentially at equal intervals, and an electrical separation angle of ( θ _{E}/2 + α _{E}) defined between the center lines of corresponding claw poles of the adjacent stator assemblies in such a way that θ _{E}/2 is an electrical angle equal to 90° and α _{E} is an electrical angle lying within the range of -10° < α _{E} < 0° .

With the motor having such a structure according to the present invention, the wave form of the sum of squares of the BEMFs (back-electromotive forces) excited in the coil at each phase is linear and the ripples are small. Thus, vibration is reduced to allow the motor to rotate smoothly. This is because the sum of squares of the BEMFs at each phase is proportional to the magnitude of the rotational torque which is applied to the rotor (magnet) at any position when the wave form is sinusoidal, and the more linear the wave form, the more uniform the rotational torque to be generated.
Fig. 1 is a perspective view of a partially broken claw type stepping motor according to a first embodiment of the present invention;
Fig. 2 is a longitudinal cross-sectional view of the motor in Fig. 1;
Fig. 3 is a view with its upper half portion showing a plan view of the motor itself in Fig. 1 and its lower half portion showing a plan view of the motor with a flange removed therefrom;
Fig. 4 is a longitudinal cross-sectional view of Fig. 1;
Fig. 5 is a partially enveloping view of the poles of the claw pole of the A-phase stator assembly and the B-phase stator assembly of the motor in Fig. 1;
Fig. 6 shows the wave forms of the square sums of the BEMFs of the motor in Fig. 1 and the conventional motor;
Fig. 7 is a diagram showing a characteristic of oscillation levels with respect to the electric adjustment between the claw poles of the adjacent stator assemblies at the corresponding phases;
Fig. 8 is a view of a claw-pole type stepping motor according to a second embodiment of the present invention, with the upper half portion showing a plan view of the motor itself and with the lower half portion showing a cross section along line Z-Z of Fig. 9; and
Fig. 9 is a longitudinal cross-sectional view of the claw-pole type stepping motor according to the present invention.

The present invention will be described by way of the preferred embodiments of a two-phase claw pole type stepping motor which is one of claw pole type synchronous motors, with reference to the accompanying drawings.

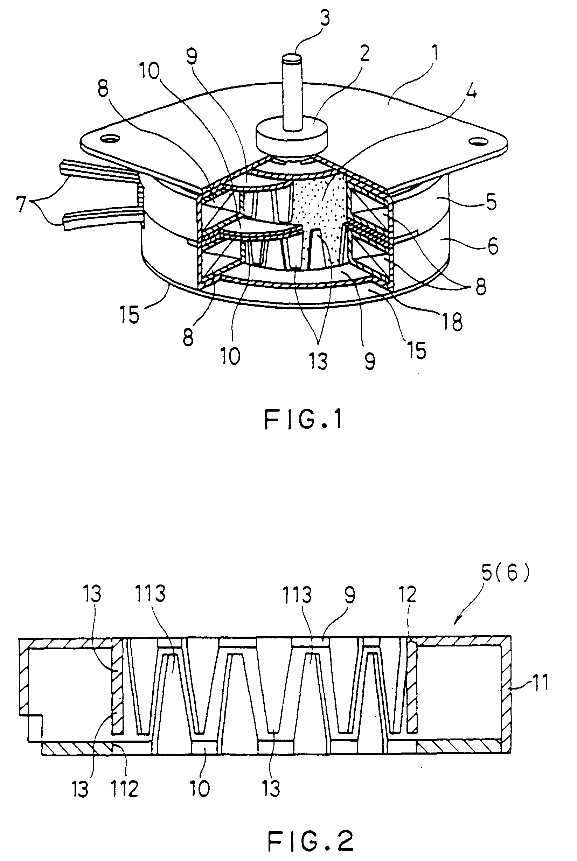

A first embodiment of the present invention will be described with reference to Figs. 1 to 5.

As shown in Figs 1 to 4, the claw pole type stepping motor according to the first embodiment of the present invention is of an inner rotor type and has a pair of flanges 1 and 15 spaced apart from each other and a shaft 3 rotatably provided in the central portions of the flanges through bearings 2 and 16. A cylindrical rotor 4 having a multi-pole magnetized permanent magnet is fixedly mounted on the shaft 3 through a cylindrical sleeve 17.

Two stator assemblies 5 and 6 are arranged back-to-back and coaxially surround the rotor 4. The stator assembly 5 constitutes an A-phase stator assembly and the stator assembly 6 constitutes a B-phase stator assembly. A coil 8 wound in a U-shaped bobbin 18 is provided in each stator assembly. Lead-off wires 7 are pulled out of the coils 8.

As shown in Fig. 2, each of the stator assemblies 5 and 6 comprises two stators 9 and 10 arranged in parallel with each other. One of the stators 9 is formed on its outer edge with- a cylindrical wall 11. On each of the circular inner edge 12 of the stator 9 and the circular inner edge 112 of the stator 10 are formed a plurality of substantially isoscecles triangular claw poles 13 and 113 arranged circumferentially at equal intervals.

The claw poles 13 and 113 have their bases formed on the inner edges 12 and 112 of the corresponding stators 9 and 10 and extend therefrom toward the inner edges 112 and 12 of the other stators 10 and 9, respectively.

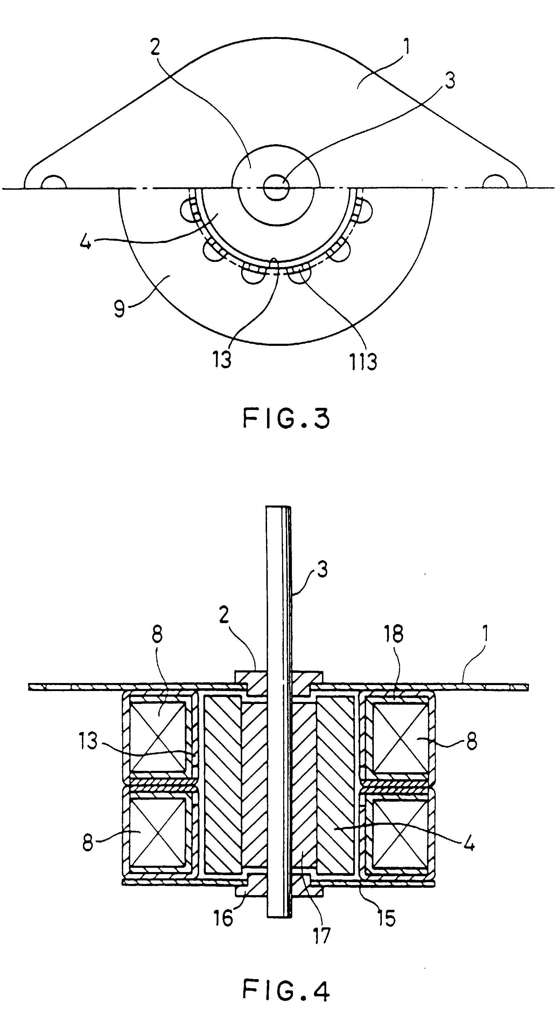

As shown in Figs. 2 and 4, the claw poles 13 of one stator 9 and the claw poles 13 of the other stator 10 are arranged alternately and surround the rotor 4.

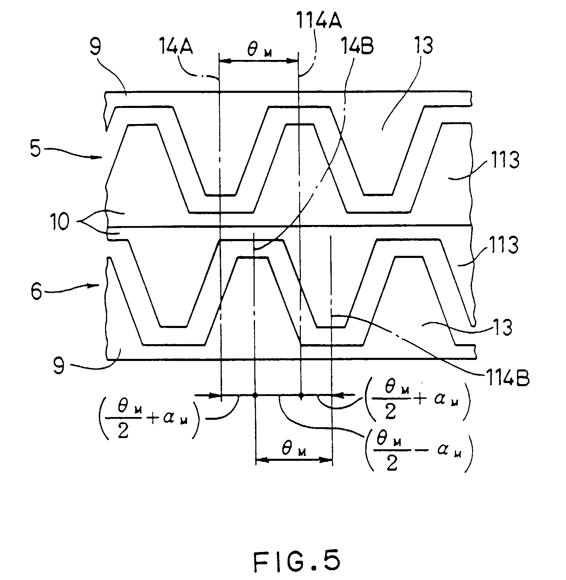

Fig. 5 is a partial enveloping view of the combination of the claw poles 13 and 113 of the A-phase stator assembly 5 and the B-phase stator assembly 6. In this figure, the center line 14A of each claw pole 13 of the stator 9 at the outside of the A-phase stator assembly 5 and the center line 14B of the corresponding one of the claw poles 113 of the stator 9 at the outside of the B-phase stator assembly 6 define a mechanical angle (a mechanically separation angle) φ _{M} extended at the central axes of the stator assemblies 5 and 6 as the centers and equal to ( θ _{M}/2 + α _{M}). Here, θ _{M}/2 is a theoretical step angle and equal to 360° /n provided that n is the number of steps, and α _{M} is a mechanical adjustment angle measured from the step angle θ _{M}/2.

When the angle between the center line 14A and the center line 14B is smaller than the step angle θ _{M}/2, the value of α _{M} is negative. The mechanical separation angle between the center line 114A of each claw pole 113 of the inner stator 10 of the A-phase stator assembly 5 and the center line 114B of the corresponding one of the claw poles 113 of the inner stator 10 of the B-phase stator assembly 6 is also negative, when the angle between the center line 114A and the center line 114B is smaller than the step angle θ _{M}/2.

An electrical separation angle φ _{E} defined between the center lines 14A and 14B and between 114A and 114B is equal to the theoretical phase angle θ _{E}/2 plus the electrical adjustment angle α _{E}, where θ _{E}/2 = 90° .

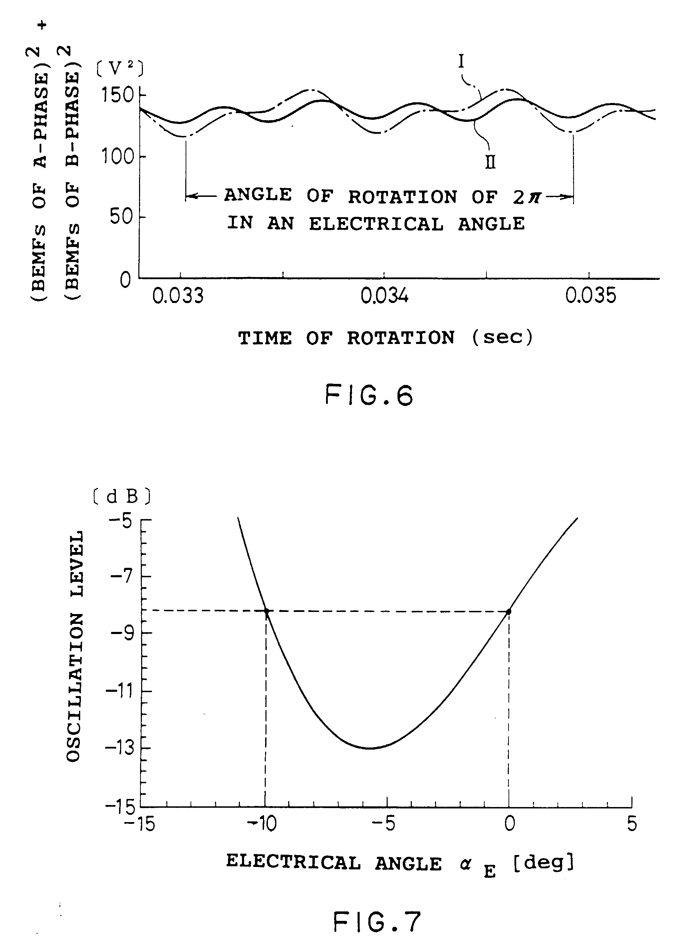

As mentioned above, the conventional claw pole type stepping motor is manufactured so as to keep the angle between the corresponding claw poles of a pair of stator assemblies to φ ₘ = θ _{M}/2( φ _{E} = θ _{E}/2), i.e., α _{M} = 0 ( α _{E} = 0) at an extremely high accuracy in order to reduce the oscillation. Since, however, the wave form of the sum of squares of the BEMFs excited in the coils at both phases is not linear but is periodically changed and the peak-to-peak value is large as shown by I in Fig. 6, ripples are large, resulting in generation of large vibration upon operation of the motor.

Researches and experiments on the relations between the sum of squares of the BEMFs at both phases and smoothness of rotation of the motor were made by the inventors of the present invention. As a result of them, it was found that the oscillation level is reduced so that it is less than that at the theoretical phase angle θ _{E}/2 in a range of the oscillation level in which the oscillation had been thought to be increased, in the case where the center lines 14B and 114B of the claw poles 13 and 113 of the B-phase stator assembly 6 advance from the center lines 14A and 114A of the corresponding claw poles 13 and 113 of the A-phase stator assembly 5 by an electrical angle of more than 0° and less than 10° from the theoretical phase angle θ _{E}/2, i.e., in the case where the electrical adjustment angle α _{E} is more than -10° and less than 0° as shown in Fig. 5.

Particularly, it was found that the oscillation level, at which the phase angle advances by approximately 5.9° in an electrical angle (i.e., at the electrical adjustment angle of approximately minus 5.9° ), is less by approximately 4.8dB than that in the case where the phase angle is unchanged.

As shown by II in Fig. 6, at the electrical adjustment angle of -5° , the wave form represented by the sum of squares of the BEMFs excited in the A-phase and B-phase coils 8 is approximately linear and the peak-to-peak value becomes small to make the ripples small, resulting in reduction of the oscillation of the motor. In this case, the value of α _{M} corresponding to this α _{E} is more than -40° /n and less than 0° .

In consequence, the oscillation of the motor upon operation thereof can be reduced from that of the conventional motor by advancing the phase angle φ _{E} by an angle within the above-mentioned range without using other specific means. In other words, a two-phase claw pole type stepping motor can be obtained which can be used on an oscillation-sensitive apparatus while the cost of the motor remains inexpensive.

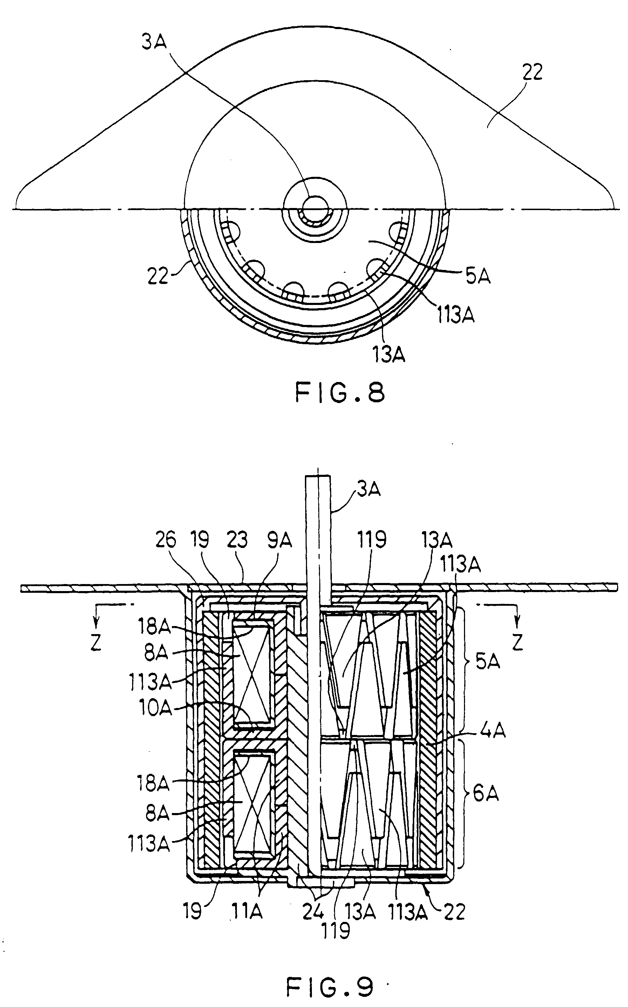

In Figs. 8 and 9 is shown a second embodiment of a two-phase claw pole type stepping motor according to the present invention. This motor is of an outer rotor type and has two assemblies, i.e., an A-phase stator assembly 5A and a B-phase stator assembly 6A which are arranged back-to-back. Each stator assembly comprises two stators 9A and 10A.

A cylindrical wall 11A is formed on the inner edge of each stator. The stators 9A and 10A are fitted on a bearing 24 as will be described later. A coil 8A wound in a bobbin 18A having a U-shaped cross section is disposed between the stators 9A and 10A of each stator assembly.

Claw poles 13A are formed on the outer edges 19 and 119 of the stators 9A and 10A and arranged circumferentially at equal intervals and extend toward the outer edges 119 and 19 of the opposed stators 10A and 9A. The claw poles 13A and 113A of the stator assemblies 5A and 6A are arranged alternately as in the case of the first embodiment. A hollow cylindrical rotor 4A coaxially surrounds both stator assemblies 5A and 6A.

A cup-shaped motor housing 22 has a flange on its open end and contains the assembly of the stator assemblies 5A and 6A and the rotor 4A. A bearing 24 comprises a cylindrical sleeve and extends coaxially through the motor housing 22. The inner end of the bearing 24 is fixed to the bottom of the housing 22. A shaft 3A extends through the central hole of the bearing 24 and the central portion of an end plate 23 which closes the open end of the motor housing 22. The outer peripheral surface and the lower end of the shaft 3A are rotatably held by the bearing 24.

The stator assemblies 5A and 6A are securely provided in the motor housing 22 by fixing their inner peripheral surfaces to the bearing 24. The rotor 4A surrounding the stator assemblies 5A and 6A is fixed to the shaft 3A so as to be rotatable therewith. Figs. 5 to 7 are also applied to the second embodiment.

The present invention can be applied not only to a three or more-phase claw pole type stepping motor but also to a motor including a multi-phase claw pole type motor.

Since the separation angle defined between the center lines of the corresponding claw poles of the adjacent stator assemblies is set so that an adjustment angle is within a predetermined angular range, the vibration of the motor structure according to the present invention is reduced. Thus, the motor of the present invention can be manufactured at a low cost without using the other specific means and can be used on an apparatus which requires low vibration. In particular, a motor performing microstepping drive has a remarkable vibration reducing efficiency.

## Claims

1. A motor structure comprising:
a rotor (4; 4A) having an axis and a multi-pole magnetized permanent magnet;
a plurality of stator assemblies (5, 6; 5A, 6A) provided adjacent to each other and coaxial with said rotor (4; 4A); and
claw poles (13, 113; 13A, 113A) formed so as to face said rotor (4; 4A) and arranged in parallel with said axis of said rotor (4; 4A) on each of said stator assemblies (5, 6; 5A, 6A) and circumferentially at equal intervals characterized by
an electrical separation angle of (θ _{E}/2 + α _{E}) defined between center lines (14A, 14B; 114A, 114B) of the corresponding claw poles (13, 113; 13A, 113A) of said adjacent stator assemblies (5, 6; 5A, 6A) in such a way that θ _{E}/2 is an electrical angle equal to 90° and α _{E} is an electrical angle lying within the range of -10° < α _{E} < 0° .

2. The motor structure according to claim 1, characterized in that said α _{E} is substantially between -4° to -6° in an electric angle.

3. The motor structure according to claim 1 or claim 2, characterized in that said stator assemblies (5, 6; 5A, 6A) comprise an A-phase stator assembly and a B-phase stator assembly.

4. The motor structure according to claim 3, characterized in that said motor structure is of a microstepping drive type.

## Patentansprüche

1. Motorauslegung, welche folgendes aufweist:
einen Rotor (4; 4A), welcher eine Achse und einen multipolmagnetisierten Permanentmagneten hat;
eine Mehrzahl von Statoranordnungen (5, 6; 5A, 6A), welche benachbart zueinander und koaxial zu dem Rotor (4; 4A) vorgesehen sind; und
Klauenpole (13, 113; 13A, 113A), welche derart ausgebildet sind, daß sie dem Rotor (4; 4A) zugewandt sind und parallel zu der Achse des Rotors (4; 4A) auf jeder Statoranordnung (5, 6; 5A, 6A) und in Umfangsrichtung in regelmäßigen Abständen angeordnet sind;
**gekennzeichnet durch**:
einen elektrischen Trennwinkel von (θ_{E}/2 + α_{E}), welcher zwischen den Mittellinien (14A, 114B; 114A, 144B) der zugeordneten Klauenpole (13, 113; 13A, 113A) der benachbarten Statoranordnungen (5, 6; 5A, 6A) derart bestimmt ist, daß θ_{E}/2 ein elektrischer Winkel gleich 90° und α_{E} ein elektrischer Winkel ist, welcher innerhalb des Bereiches von -10° <α_{E} 0°liegt.

2. Motorauslegung nach Anspruch 1, **dadurch gekennzeichnet**, daß α_{E} im wesentlichen zwischen -4° bis -6° eines elektrischen Winkels liegt.

3. Motorauslegung nach Anspruch 1 oder Anspruch 2, **dadurch gekennzeichnet**, daß die Statoranordnungen (5, 6; 5A, 6A) eine A-Phase-Statoranordnung und eine B-Phasen-Statoranordnung aufweisen.

4. Motorauslegung nach Anspruch 3, **dadurch gekennzeichnet**, daß die Motorauslegung eine Mikroschritt-Antriebseinrichtung ist.

## Revendications

1. Structure de moteur comprenant:
un rotor (4; 4A) ayant un axe et un aimant permanent magnétisé multi-polaire;
une pluralité d'ensembles stators (5, 6; 5A, 6A) qui sont voisins les uns des autres et qui, avec ledit rotor (4; 4A), sont coaxiaux;
des pôles à griffes (13, 113; 13A, 113A) prévus, sur chacun desdits ensembles stators (5, 6; 5A, 6A), en face dudit rotor (4; 4A), parallèlement audit axe dudit rotor (4; 4A), et disposés circulairement à intervalles égaux; et
caractérisée par un angle de séparation électrique ( _{E}/2 + _{E}), défini entre les lignes centrales (14A, 14B; 114A, 114B) des pôles à griffes correspondants (13, 113; 13A, 113A) desdits ensembles stators voisins (5, 6; 5A, 6A), de telle manière que _{E}/2 soit un angle électrique égal à 90° et que _{E} soit un angle électrique compris entre 0° et -10°.

2. Structure de moteur suivant la revendication 1, caractérisée en ce que ledit _{E} est compris pratiquement entre -4° et -6° dans un angle électrique.

3. Structure de moteur suivant la revendication 1 ou 2, caractérisée en ce que lesdits ensembles stators (5, 6; 5A, 6A) comprennent un ensemble stator de phase A et un ensemble stator de phase B.

4. Structure de moteur suivant la revendication 1, caractérisée en ce que ladite structure de moteur est un type de micro-entraînement pas à pas.
